# EUROPEAN PATENT SPECIFICATION

(11) **EP 0 779 739 B1**
(45) Date of publication and mention of the grant of the patent: **29.05.2002**
(21) Application number: 96119760.5
(22) Date of filing: 10.12.1996
(51) Int. Cl.: H04N 7/173, H04N 7/16, H04Q 11/04

(54) **Architecture and method for providing interactive broadband products and services using existing telephone plant**
Architektur und Verfahren zur Bereitstellung von interaktiven breitbandigen Produkten und Diensten unter Verwendung einer vorhandenen Telefonvermittlungsanlage
Architecture et méthode pour fournir des produits et services interactifs à large bande en utilisant un central téléphonique disponible

(30) Priority: 14.12.1995 US 572301
(43) Date of publication of application: 18.06.1997
(60) Divisional application: 01125947.0
(73) Proprietor: MediaOne Group, Inc., Englewood, Colorado 80112 (US); US West, Inc., Denver, CO 80202 (US)
(72) Inventor: Lin, K. David, Boulder, CO 80303 (US); Cox, Louis Anthony Jr., Denver, CO 80218 (US); Starr, James H., Littleton, CO 80127 (US); Ralston, Margarete A., Westminster,CO 80030 (US); Bulick, Stephen, Boulder,CO 80304 (US); Beveridge, Gregory J., Thornton, CO 80241 (US)
(74) Representative: Grättinger & Partner (GbR)

(56) References cited:
- WO-A-95/11569
- GB-A- 2 272 823
- US-A- 5 247 347
- US-A- 5 357 276
- US-A- 5 437 052
- ELECTRICAL COMMUNICATION, 1994, pages 281-289, XP000468249 CALVET J D ET AL: "INTERACTIVE VIDEOCOMMUNICATION EVOLUTION"
- PROCEEDINGS OF THE INTERNATIONAL CONFERENCE ON COMMUNICATIONS (ICC), GENEVA, MAY 23 - 26, 1993, vol. 1 - 2 - 03, 23 May 1993, INSTITUTE OF ELECTRICAL AND ELECTRONICS ENGINEERS, pages 848-852, XP000371202 GELMAN A D ET AL: "AN ARCHITECTURE FOR INTERACTIVE APPLICATIONS"
- INTERNATIONAL CONFERENCE ON CONSUMER ELECTRONICS - DIGEST OF TECHNI PAPERS, ROSEMONT, JUNE 7 - 9 1995, no. CONF. 14, 7 June 1995, INSTITUTE OF ELECTRICAL AND ELECTRONICS ENGINEERS, page 368/369 XP000547858 CHAMBERS C S: "DESIGNING A SET-TOP BOX OPERATING SYSTEM"

## Description

### Technical Field

The present invention relates generally to broadband products and services and, more particularly, to an improved architecture and method for providing such products and services using existing telephone plant.

### Background Art

"Broadband" products and services, as they are generally referred to in the art, relate to those services and products which are transmitted using equipment and media which support a wide range of electromagnetic frequencies. For example, any voice communications channel having a bandwidth greater than a voice grade telecommunications channel may be referred to as broadband or wideband. Within the telephone industry, the term "broadband" denotes a very high digital line rate such as the 156 megabits per second (Mb/s) optical line rate of new sonet OC3-level fiber-optic systems.

WO 95/11569 discloses a one-way video distribution system that time-shares a given RF channel to deliver multiple video presentations to multiple customers on a logical bus architecture. Access permission to a given customer for a given presentation is accomplished by identification of the user or terminal at the central system controller. Certain presentations can be effectively denied by selectively inhibiting processing and reformatting at non-authorized user terminals. Additionally, the described time-sharing and video reformatting process at a user terminal amounts to a form of service-specific compression that results in reduction of signal quality for the delivered presentation. The transmission channel toward a customer is described as a cable channel or other transmission medium. The control channel from remote user terminal to the system controller is described as an associated telephone line or other communications link, separate from the service delivery medium.

US-A 5 247 347 discloses a public switched telephone network (PSTN) architecture for video-on-demand services. The PSTN provides digital video signals from a video information provider to one or more of a plurality of subscriber premises. A subscriber uses either a standard telephone instrument over the PSTN or a dedicated control device over an ISDN packet network to order video programming. The request is transmitted to a designated video information provider and digital transmission connectivity is established between the video information provider and the central office serving the subscriber. Connectivity between the central office and subscriber is provided by asymmetrical digital subscriber line interface units over a local loop. The interface units frequency multiplex digital video information with voice information to the subscriber and support transmission of a reverse control channel from the subscriber to the central office for transmission on the ISDN packet data network back to the video information provider. The interfaces also allow baseband signalling and audio between the central office and the subscriber for conventional telephone instrument connectivity. US-A 5247347 teaches both-way transmission of service and control signals to and from customer premises on telephone plant. Specifically, this document discloses the use of ADSL technology operating on a single twisted copper pair to given customer premises. There is no teaching or suggestion of combined use of disparate media to and from customer premises.

While interactive broadband services and products are desirable, the new overlay networks necessary for their implementation are today cost prohibitive. Consequently, there exists a need for an interim solution for providing interactive broadband services and products to users which does not require the construction and implementation of an entirely new broadband network. Such an interim solution should utilize the existing network facilities and should not require substantial investment in new equipment or network connections.

### Disclosure of the Invention

It is a principle object of the present invention, which is defined in its broadest aspects in claims 1 and 5, to provide an improved architecture and method for providing interactive broadband products and services using existing telephone plant.

In carrying out the above stated object the architecture of the present invention includes a head-end server in communication with a Central Office Switch (COS). A Customer Premises Equipment (CPE) device is further provided in communication with the head-end server via cable plant for downstream broadcasts and in communication with the COS via telephone plant for upstream signaling. Downstream control messages may be sent from the head-end server to the CPE device via one of the cable plant and the telephone plant.

The architecture further includes a gateway in two-way communication with the head-end server and the COS, which includes processing capability to determine and advise the CPE device which frequency it should tune to.

The CPE device is preferably, but not necessarily, a set-top terminal, i.e. a "set-top box" which is adapted to communicate with the COS via an Integrated Services Digital Network (ISDN) line or a Plain Old Telephone Service (POTS) line.

Alternatively, the CPE device may be a personal computer adapted to communicate with the COS via a modem on a POTS line.

In further carrying out the above stated object, a method is described herein for providing interactive broadband products and services using existing cable and telephone plant. The method comprises providing a head-end server and the COS in communication with one another. The method further includes providing a CPE device in communication with the head-end server via cable plant and in communication with the COS via telephone plant. Downstream broadcasts are sent from the head-end server to the CPE device via the cable plant. Similarly, upstream signals are sent from the CPE device to the head-end server via the telephone plant. Downstream control messages may be sent from the head-end server to the CPE device via one of the cable plant and the telephone plant.

The above object and other objects, features, and advantages of the present invention are readily apparent from the following detailed description of the best mode for carrying out the invention when taken in connection with the accompanying drawings.

### Brief Description of the Drawings

- Figure 1: is a schematic diagram of the architecture of the present invention; and
- Figure 2: is a flow diagram of the method of operation of the architecture of Figure 1.

### Best Modes for carrying out the Invention

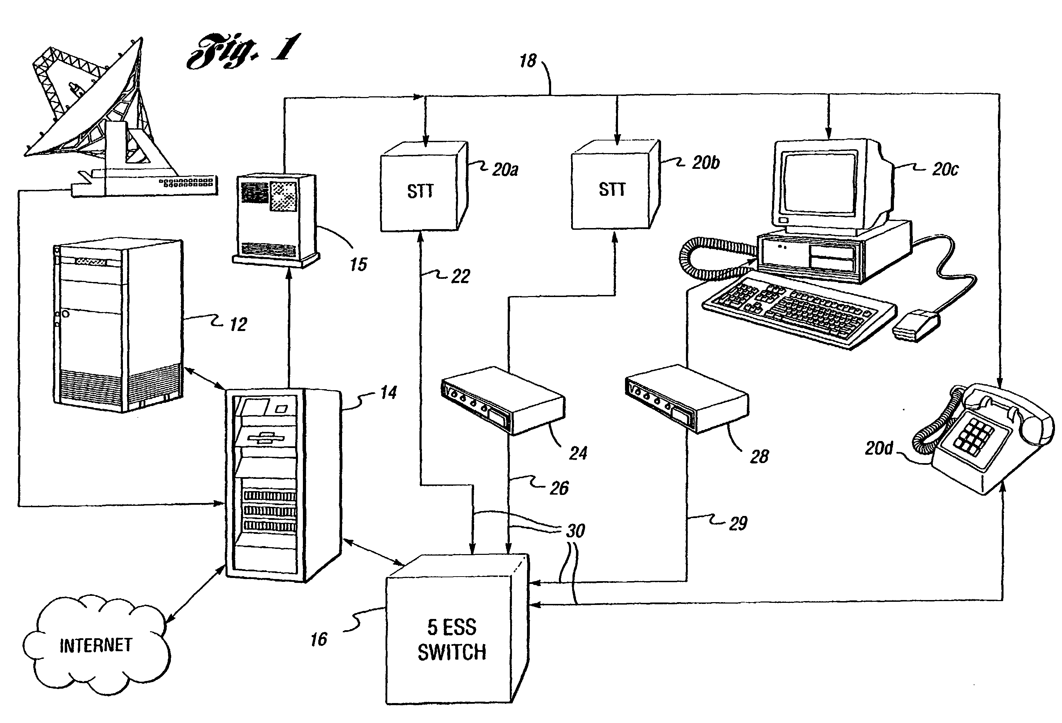

A preferred embodiment of the improved architecture of the present invention is shown in Figure 1 and designated generally by reference numberal 10. Architecture 10 includes a head-end server 12 in communication with a gateway 14. Gateway 14, in turn, is provided in communication with a Central Office Switch (COS) 16 and cable head end 15 via existing cable plant (coaxial cable) 18. Cable head end 15 is similarly provided in communication with a CPE device 20a, 20b or 20c via cable plant 18.

As shown, CPE devices 20a-20c may comprise a modem emulator or data terminal such as, for example, a set-top terminal (20a, 20b) or a personal computer (20c). If the CPE device is a set-top terminal (20a, 20b), it may be connected to central office switch 16 via Integrated Service Digital Network (ISDN) line 22 or via a modem 24 over a Plain Old Telephone Service (POTS) line 26. If the CPE device is a Personal Computer (PC) (20c), it may similarly be connected to COS 16 via an ISDN modem 28 and ISDN line 29. A telephone 31 may also be provided in connection with gateway 14 via coaxial cable 18 and in communication with central office switch 18 via ISDN or a POTS line as described above.

In operation, cable plant 18 provides the downstream broadcast channel from the server 12 to CPE devices 20a-20c. Telephone plant 30 provides the necessary channel for upstream signaling and downstream control messages. Such control messages may include, for example, which frequency the CPE device should tune to receive a desired broadcast. Typically, such control messages are processed at gateway 14.

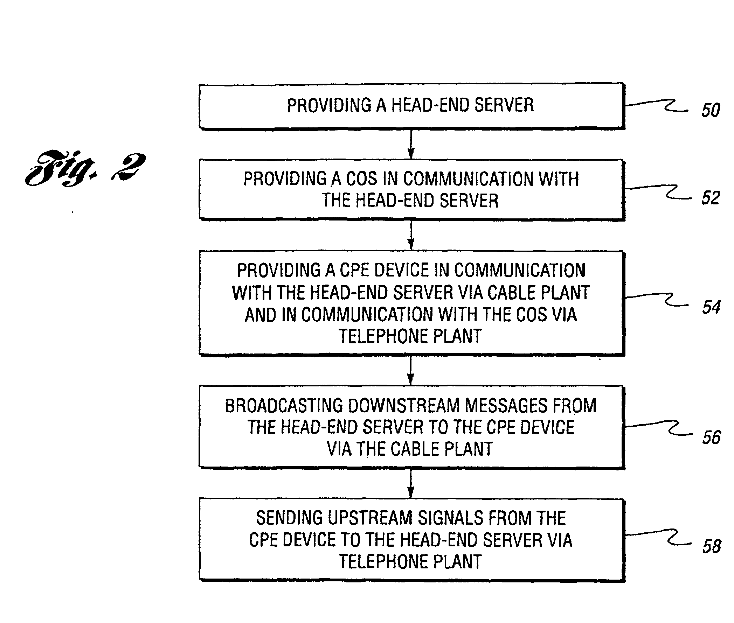

Figure 2 is a flow diagram of the method of operation of the architecture of Figure 1. As shown in Figure 2, a method is described for providing interactive broadband products and services using existing cable and telephone plant. The method includes providing 50 a head-end server as well as providing 52 a COS in communication therewith. Still further, the method includes providing 54 a CPE device in communication with the head-end server via cable plant and in communication with the COS via telephone plant. Downstream broadcasts are sent 56 from the head-end server to the CPE device via the cable plant. Similarly, upstream signals are sent 58 from the CPE device to the head-end server via the telephone plant.

While the best modes for carrying out the invention has been described in detail, those familiar with the art to which this invention relates will recognize various alternative designs and embodiments for practicing the invention as defined by the following claims.

## Claims

1. Architecture for providing interactive broadband products and services using existing telephone plant (30) and cable plant (18), comprising :
a head-end server (12);
a Central Office Switch (COS) (16) in communication with the head-end server (12);
a Customer Premises Equipment (CPE) device (20) in communication with the head-end server (12) via the cable plant (18) for downstream broadcasts, in communication with the COS (16) via the telephone plant (30) for upstream signaling, and in communication with the head-end server (12) via one of the cable plant (18) and the telephone plant (30) for downstream control messages; and
a Gateway (14) in two-way communication with the head-end server (12) and the COS (16), the Gateway (14) having processing capability to determine which frequency the CPE device (20) should tune to.

2. The architecture of claim 1, wherein the CPE device (20) is one of a set-top terminal (20a, 20b) and a personal computer (20c) adapted to communicate with the COS (16) via an Integrated Services Digital Network (ISDN) telephone line (22).

3. The architecture of claim 1, wherein the CPE device (20) is one of a set top terminal (20a, 20b) and a personal computer (20c) adapted to communicate with the COS (16) via a modem (24) using a Plain Old Telephone Service (POTS) line (26).

4. The architecture of claim 1, wherein the CPE device (20) is one of a set-top terminal (20a, 20b) and a personal computer (20c) adapted to communicate with the COS (16) via an ADSL conditioned telephone line.

5. A method for providing interactive broadband products and services using existing telephone plant (30) and cable plant (18), comprising :
providing a head-end server (12) ;
providing a Central Office Switch (COS) (16) in communication with the head-end server (12); providing a Customer Premises Equipment (CPE) device (20) in communication with the head-end server (12) via the cable plant (18) and in communication with the COS (16) via the telephone plant (30);
sending downstream broadcasts from the head-end server (12) to the CPE device (20) via the cable plant (18) ;
sending upstream signals from the CPE device (20) to the head-end server (12) via the telephone plant (30) ;
sending downstream control messages from the head-end server (12) to the CPE device (20) via one of the cable plant (18) and the telephone plant (30); providing a Gateway (14) in two-way communication with the head-end server (12) and the COS (16); processing the control messages at the Gateway (14) to determine which frequency the CPE device (20) should tune to; and
generating a corresponding signal at the Gateway (14) for receipt by the CPE device (20).

6. The method of claim 5, wherein the upstream signals are sent on an Integrated Services Digital Network (ISDN) telephone line (22).

7. The method of claim 5, wherein the upstream signals are sent on a Plain Old Telephone Service (POTS) line (26).

8. The method of claim 5, wherein the upstream signals are sent on an ADSL conditioned telephone line.

## Patentansprüche

1. Architektur zur Bereitstellung von interaktiven breitbandigen Produkten und Diensten unter Verwendung einer vorhandenen Telefonvermittlungsanlage (30) und Kabelanlage (18), umfassend:
einen Kopfstellenserver (12),
eine Fernsprechvermittlungsstelle (COS) (16) in Kommunikation mit dem Kopfstellenserver (12);
eine Teilnehmergerätschafts-(CPE)-Vorrichtung (20) in Kommunikation mit dem Kopfstellenserver (12) über die Kabelanlage (18) für Netzabwärtssendungen, in Kommunikation mit der COS (16) über die Telefonvermittlungsanlage (30) für Netzaufwärtssignalübertragung und in Kommunikation mit dem Kopfstellenserver (12) entweder über die Kabelanlage (18) oder die Telefonvermittlungsanlage (30) für Netzabwärtssteuermeldungen; und
eine Überleiteinrichtung (14) in doppeltgerichteter Kommunikation mit dem Kopfstellenserver (12) und der COS (16), wobei die Überleiteinrichtung (14) Verarbeitungsfähigkeit aufweist, um zu bestimmen, welche Frequenz die CPE-Vorrichtung (20) einstellen soll.

2. Architektur nach Anspruch 1, wobei die CPE-Vorrichtung (20) entweder ein Set-Top-Endgerät (20a, 20b) oder ein Personalcomputer (20c) ist, die geeignet sind, um mit der COS (16) über eine diensteintegrierende digitale Nachrichtennetz-(ISDN)-Telefonleitung (22) zu kommunizieren.

3. Architektur nach Anspruch 1, wobei die CPE-Vorrichtung (20) entweder ein Set-Top-Endgerät (20a, 20b) oder ein Personalcomputer (20c) ist, die geeignet sind, um mit der COS (16) über ein Modem (24) unter Verwendung einer einfachen Fernsprechdienst-(POTS)-Leitung (26) zu kommunizieren.

4. Architektur nach Anspruch 1, wobei die CPE-Vorrichtung (20) entweder ein Set-Top-Endgerät (20a, 20b) oder ein Personalcomputer (20c) ist, die geeignet sind, um mit der COS (16) über eine ADSL-bedingte Telefonleitung zu kommunizieren.

5. Verfahren zur Bereitstellung von interaktiven breitbandigen Produkten und Diensten unter Verwendung einer vorhandenen Telefonvermittlungsanlage (30) und Kabelanlage (18), umfassend:
Bereitstellen eines Kopfstellenservers (12);
Bereitstellen einer Fernsprechvermittlungsstelle (COS) (16) in Kommunikation mit dem Kopfstellenserver (12);
Bereitstellen einer Teilnehmergerätschafts-(CPE)-Vorrichtung (20) in Kommunikation mit dem Kopfstellenserver (12) über die Kabelanlage (18) und in Kommunikation mit der COS (16) über die Telefonvermittlungsanlage (30);
Senden von Netzabwärtssendungen vom Kopfstellenserver (12) zur CPE-Vorrichtung (20) über die Kabelanlage (18);
Senden von Netzaufwärtssignalen von der CPE-Vorrichtung (20) zum Kopfstellenserver (12) über die Telefonvermittlungsanlage (30);
Senden von Netzabwärtssteuermeldungen vom Kopfstellenserver (12) zur CPE-Vorrichtung (20) entweder über die Kabelanlage (18) oder die Telefonvermittlungsanlage (30);
Bereitstellen einer Überleiteinrichtung (14) in doppeltgerichteter Kommunikation mit dem Kopfstellenserver (12) und der COS (16);
Verarbeiten der Steuermeldungen an der Überleiteinrichtung (14), um zu bestimmen, welche Frequenz die CPE-Vorrichtung (20) einstellen soll; und
Erzeugen eines entsprechenden Signals an der Überleiteinrichtung (14) zum Empfang durch die CPE-Vorrichtung (20).

6. Verfahren nach Anspruch 5, wobei die Netzaufwärtssignale auf einer diensteintegrierenden digitalen Netzwerk-(ISDN)-Telefonleitung (22) gesendet werden.

7. Verfahren nach Anspruch 5, wobei die Netzaufwärtssignale auf einer einfachen Fernsprechdienst-(POTS)-Leitung (26) gesendet werden.

8. Verfahren nach Anspruch 5, wobei die Netzaufwärtssignale auf einer ADSL-bedingten Telefonleitung gesendet werden.

## Revendications

1. Architecture pour fournir des produits et services interactifs à large bande en utilisant un central téléphonique (30) et un réseau de câbles (18) disponibles, comprenant :
un serveur de tête de réseau (12) ;
un commutateur public (COS) (16) en communication avec le serveur de tête de réseau (12) ;
un appareil (20) d'équipement dans les locaux du client (CPE) en communication avec le serveur de tête de réseau (12) via le réseau de câbles (18) pour les transmissions en aval, en communication avec le COS (16) via le central téléphonique (30) pour la transmission de signaux en amont, et en communication avec le serveur de tête de réseau (12) via l'un des deux du réseau de câbles (18) et du central téléphonique (30) pour les messages de contrôle en aval ; et
une passerelle (14) en communication à deux voies avec le serveur de tête de réseau (12) et le COS (16), la passerelle (14) ayant une capacité de traitement pour déterminer à quelle fréquence l'appareil CPE (20) doit syntoniser.

2. Architecture de la revendication 1, caractérisée en de que l'appareil CPE (20) est soit un terminal codeur (20a, 20b), soit un micro-ordinateur (20c) adapté pour communiquer avec le COS (16) via une ligne téléphonique (22) à réseau digital à services intégrés (ISDN).

3. Architecture de la revendication 1, caractérisée en de que l'appareil CPE (20) est soit un terminal codeur (20a, 20b), soit un micro-ordinateur (20c) adapté pour communiquer avec le COS (16) via un modem (24), en utilisant une simple ligne (26) de service téléphonique ancienne (POTS).

4. Architecture de la revendication 1, caractérisée en de que l'appareil CPE (20) est soit un terminal codeur (20a, 20b), soit un micro-ordinateur (20c) adapté pour communiquer avec le COS (16) via une ligne téléphonique équipée de l'ADSL.

5. Méthode pour fournir des produits et services interactifs à large bande en utilisant un central téléphonique (30) et un réseau de câbles (18) disponibles, comprenant :
la fourniture d'un serveur de tête de réseau (12) ;
la fourniture d'un commutateur public (COS) (16) en communication avec le serveur de tête de réseau (12) ; la fourniture d'un appareil (20) d'équipement dans les locaux du client (CPE) en communication avec le serveur de tête de réseau (12) via le réseau de câbles (18) et en communication avec le COS (16) via le central téléphonique (30) ;
l'envoi de transmissions en aval à partir du serveur de tête de réseau (12) à l'appareil CPE (20) via le réseau de câbles (18) ;
l'envoi de signaux en amont à partir de l'appareil CPE (20) au serveur de tête de réseau (12) via le central téléphonique (30) ;
l'envoi de messages de contrôle en aval à partir du serveur de tête de réseau (12) à l'appareil CPE (20) via l'un des deux du réseau de câbles (18) et du central téléphonique (30) ;
la fourniture d'une passerelle (14) en communication à deux voies avec le serveur de tête de réseau (12) et le COS (16) ;
le traitement des messages de contrôle sur la passerelle (14) pour déterminer à quelle fréquence l'appareil CPE (20) doit syntoniser ; et
la génération d'un signal correspondant sur la passerelle (14) pour réception par l'appareil CPE (20).

6. Méthode de la revendication 5, **caractérisée en ce que** les signaux en amont sont envoyés à une ligne téléphonique (22) à réseau digital à services intégrés (ISDN).

7. Méthode de la revendication 5, **caractérisée en ce que** les signaux en amont sont envoyés à une simple ligne (26) de service téléphonique ancienne (POTS).

8. Méthode de la revendication 5, **caractérisée en ce que** les signaux en amont sont envoyés à une ligne téléphonique équipée de l'ADSL.
